(19) Europäisches Patentamt
European Patent Office
Office européen des brevets

(11) **EP 2 707 597 B1**

(12) **EUROPÄISCHE PATENTSCHRIFT**

(45) Veröffentlichungstag und Bekanntmachung des Hinweises auf die Patenterteilung:
**11.02.2015 Patentblatt 2015/07**

(21) Anmeldenummer: **12714952.4**

(22) Anmeldetag: **30.03.2012**

(51) Int Cl.:
*F03B 13/26* *(2006.01)*    *F03B 15/18* *(2006.01)*
*F03B 17/06* *(2006.01)*

(86) Internationale Anmeldenummer:
**PCT/EP2012/001404**

(87) Internationale Veröffentlichungsnummer:
**WO 2012/152356 (15.11.2012 Gazette 2012/46)**

(54) **STRÖMUNGSKRAFTWERK UND VERFAHREN FÜR DESSEN BETRIEB**

FLUID POWER PLANT AND A METHOD FOR OPERATING SAME

CENTRALE MARÉMOTRICE ET PROCÉDÉ DE FONCTIONNEMENT DE LADITE CENTRALE MARÉMOTRICE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2011  DE 102011101368**

(43) Veröffentlichungstag der Anmeldung:
**19.03.2014  Patentblatt 2014/12**

(73) Patentinhaber: **Voith Patent GmbH**
**89522 Heidenheim (DE)**

(72) Erfinder:
• **ARLITT, Raphael**
  **89077 Ulm (DE)**
• **BISKUP, Frank**
  **73527 Schwäbisch Gmünd (DE)**
• **PERNER, Norman**
  **89233 Neu Ulm (DE)**

(74) Vertreter: **Dr. Weitzel & Partner**
**Patent- und Rechtsanwälte mbB**
**Friedenstrasse 10**
**89522 Heidenheim (DE)**

(56) Entgegenhaltungen:
**EP-A1- 0 223 729    EP-A1- 0 223 731**
**GB-A- 2 461 265**

**Beschreibung**

Die Erfindung betrifft ein Strömungskraftwerk sowie ein Verfahren für dessen Betrieb, insbesondere ein in einer Meeresströmung freistehendes Gezeitenkraftwerk und ein Betriebsverfahren für eine solche Anlage.

Neben den im Folgenden betrachteten Gezeitenkraftwerken kommen zur Ausführung der Erfindung weitere Strömungskraftwerke, insbesondere Flusswasserkraftwerke oder Windkraftanlagen, in Frage. Für die Ausnutzung von Gezeiterisrömungen wurden freistehende, d.h. außerhalb einer Dammstruktur angelegte Anlagen vorgeschlagen. Dabei kann der Rotor eines solchen Gezeitenkraftwerks entweder frei umströmt werden oder zur Strömungsbeschleunigung in einem Venturi-Gehäuse angeordnet sein. Für die nachfolgenden Betrachtungen wird von einem propellerförmigen Rotor ausgegangen, dem eine horizontale Drehachse zugeordnet ist. Ferner lassen sich dem Rotor eine horizontale Querachse und eine vertikale Hochachse zuordnen. Dabei bilden die Drehachse, die Querachse und die Hochachse ein orthogonale Dreibein.

Der Rotor des Gezeitenkraftwerks treibt üblicherweise einen elektrischen Generator zur Energiegewinnung an. Dabei kann eine drehstarre Verbindung zwischen dem Rotor und dem elektrischen Generator vorliegen, sodass das durch den elektrischen Generator erzeugte Generatormoment beim Betrieb unmittelbar bremsend auf den Rotor wirkt. Denkbar ist eine alternative Gestaltung, für die die Triebverbindung vom Rotor zum elektrischen Generator mittelbar erfolgt. Dabei kann anstatt einer drehstarren Verbindung ein hydrodynamischer Kreislauf, wie eine hydrodynamische Kupplung oder ein hydrodynamischer Wandler, im Antriebsstrang zwischengeschaltet sein. Ferner ist eine Ausgestaltung denkbar, für die die Rotorleistung mittels hydrostatischer Komponenten auf den elektrischen Generator übertragen wird.

Unabhängig von der konkreten Ausgestaltung des Antriebsstrangs wird im Folgenden von einer Anlage ausgegangen, bei der der elektrische Generator im Normalbetrieb mittels des Generatormoments bremsend auf den Rotor wirkt und sich am Rotor abhängig von der vorliegenden Anströmung und dem angelegten Generatormoment eine bestimmte Drehzahl einstellt. Ausgehend von einer Vermessung des Strömungsfelds am Rotor kann ein Betrieb entlang einer Anlagenkennlinie erfolgen. Dabei wird im leistungsoptimalen Betrieb das stützende Generatormoment so eingestellt, dass am Rotor eine Drehzahl resultiert, die den Leistungsbeiwert maximiert. Alternativ zu einem Kennlinienbetrieb kann der leistungsoptimale Arbeitspunkt aus den Leistungsdaten mittels eines MPP-Reglers bestimmt werden.

Erreicht das Strömungskraftwerk die Nennleistung, so erfolgt typischerweise eine Leistungsabregelung. Damit wird der leistungsoptimale Betrieb verlassen und es schließt sich ein leistungsbegrenzter Betrieb an, für den die Leistungsaufnahme des Rotors zum Schutz der für die Netzaufschaltung verwendeten leistungselektronischen Komponenten begrenzt wird. Für Windkraftanlagen werden zu diesem Zweck typischerweise die Einstellwinkel der Rotorblätter angepasst oder es erfolgt eine Leistungsabregelung durch einen Strömungsabriss am Rotor. Aufgrund einer schwierigen Zugänglichkeit der Anlagen für Wartungsarbeiten wird für Gezeitenkraftwerke ein vereinfachtes Design ohne eine Blattwinkeleinstellvorrichtung bevorzugt, sodass die erste Variante der Leistungsabregelung für eine solche Anlage nicht ausgeführt werden kann. Auch die zweite Variante ist nachteilig, da beim Eintritt eines Strömungsabrisses hohe Schubkräfte auf die Rotorblätter wirken. Zur Lösung wird durch die DE 10 2008 053 732 vorgeschlagen, zur Leistungsabregelung die Anlage in den Schnelllaufbereich zu führen. Mit zunehmender Schnelllaufzahl sinkt der Leistungsbeiwert des Rotors, sodass ein leistungsbegrenzter Betrieb ausgeführt werden kann.

Für Rotoren mit starr angelenkten Rotorblättern und einem Auftriebsläufer-Design resultiert für Gezeitenkraftwerke im leistungsbegrenzten Betrieb eine hohe Belastung. Wesentlich ist die Schubkraft des Rotors in Richtung der Drehachse sowie das Kippmoment des Rotors. Dabei resultiert das Kippmoment aus einem vertikalen Strömungsprofil am Rotor, d.h. die Anströmungsgeschwindigkeit über die vom Rotor überstrichene Fläche ist von der Wassertiefe abhängig, sodass die Bilanz der Schubkräfte zwischen der oberen Hälfte des Rotorkreises und der unteren Hälfte ein Ungleichgewicht aufweist.

Zur Umsetzung einer leistungsoptimalen und leistungsbegrenzten Anlagenführung muss der Antriebsstrang eines gattungsgemäßen Strömungskraftwerks im gesamten Betriebsbereich zur Abstützung der eingeleiteten Schubkräfte und Kippmomente ausgelegt sein. Hieraus resultieren konstruktiv aufwendige und großbauende Antriebsstränge. Zusätzlich sind massive Konstruktionen zur Ausführung einer Stützstruktur sowie für die Fundamentierung notwendig. Ferner können innerhalb eines Gezeitenkraftwerkparks mit mehreren Anlagen die Anströmungsbedingungen so stark variieren, dass unterschiedliche Anlagenauslegungen vorteilhaft wären. Eine standortspezifische Anpassung der Strömungskraftwerke auf die zu erwartenden Rotorlasten ist jedoch aufwendig, sodass typischerweise einheitliche Anlagen mit einer hinreichend bemessenen Sicherheitsreserve verwendet werden.

Die folgenden weiteren Dokumente sind bekannt geworden: GB 2 461 265 A, DE 10 2008 053 732, EP 0 223 729 A1, EP 0 223 731 A1. Die letztgenannte Schrift ist besonders relevant. Hierbei wird beim Erreichen eines Schubkraft-Schwellwerts durch Einstellen des Generatormoments der Rotor in einen lastbegrenzten Betrieb geführt, für den der Rotor mit einer Schnelllaufzahl läuft. Über das Verhältnis zwischen der Schnelllaufzahl im lastbegrenzten Betrieb und der leistungsoptimalen Schnelllaufzahl ist in dieser Schrift nichts ausgesagt.

Der Erfindung liegt die Aufgabe zugrunde, die voranstehend genannten Nachteile des Standes der Technik zu überwinden und ein Strömungskraftwerk, insbesondere zur Energiegewinnung aus Gezeiten, anzugeben, das die aus den Schublasten am Rotor resultierenden Kräfte und Momente im Antriebsstrang verringert. Des Weiteren ist ein Betriebsverfahren anzugeben, das den Antriebsstrang bei Starkanströmung entlastet. Das Betriebsverfahren soll robust und einfach auszuführen sein. Ferner soll maritimer Bewuchs die Anlage und das Betriebsverfahren möglichst geringfügig beeinflussen. Des Weiteren soll eine Möglichkeit zur möglichst einfachen standortspezifischen Anpassung gattungsgemäßer Strömungskraftwerke gegeben sein.

Die der Erfindung zugrunde liegende Aufgabe wird durch die Merkmale der unabhängigen Ansprüche gelöst. Vorteilhafte Ausgestaltungen ergeben sich aus den Unteransprüchen.

Die Erfinder haben erkannt, dass die Schubkraft des Rotors in Richtung der Drehachse sowie das Kippmoment um eine zur Anlagenhochachse und zur Drehachse senkrechten Querachse des Rotors beim Betrieb überwacht werden muss. Erreicht die Schubkraft einen Schubkraft-Schwellwert oder entsprechend das Kippmoment ein Kippmoment-Schwellwert wird der aktuell vorliegende leistungsoptimale oder leistungsbegrenzte Betrieb verlassen und stattdessen ein lastbegrenzter Betrieb eingeleitet. Hierzu wird das vom elektrischen Generator auf den Rotor aufgebrachte bremsende Moment verringert, sodass der Rotor bis zu einem neuen Arbeitspunkt beschleunigt, der bei einer höheren Rotordrehzahl und damit einer größeren Schnellaufzahl liegt. Hierdurch werden die Schubkraft sowie das Kippmoment unter dem jeweils vorgegebenen Schwellwert gehalten. Dabei wird in Kauf genommen, dass im Bereich höherer Schnelllaufzahlen der Leistungsbeiwert abfällt, sodass die Anlage während der Phase einer Starkanströmung weniger Leistung aufnimmt. Dies kann jedoch im Jahresmittel aufgrund der durch den lastbegrenzten Betrieb möglichen, verbesserten Rotorauslegung ausgeglichen werden. Des Weiteren kann die Gesamtanlage verschlankt werden.

Das Kippmoment des Rotors erreicht einen vorgegebenen Kippmoment-Schwellwert, wenn ein ausgeprägtes vertikales Strömungsprofil vorliegt. Dies ist dann der Fall, wenn aufgrund meteorlogisch bedingter Einflüsse, beispielsweise durch Winde, eine starke oberflächennahe Strömung vorliegt. Dabei kann unter Wind- und Welleneinfluss die Belastung stark variieren, sodass insbesondere Laststöße abzufangen sind. Getrennt hiervon wird der Fall einer zu großen Schubkraft in Richtung der Drehachse behandelt, wobei je nach Art der vorliegenden Grenzbelastung eine Kennlinie für den Schubbeiwert oder für die Abhängigkeit des Kippmoments von der Schnelllaufzahl für die Anlagenführung herangezogen wird. In beiden Fällen wird die Rotordrehzahl so weit erhöht, dass eine Schnelllaufzahl resultiert, für die die Lasten unterhalb der gewählten Schwellwerte liegen.

Bevorzugt wird der leistungsbegrenzte Betrieb so ausgeführt, dass ein Sollwert für die Schubkraft und/oder für das Kippmoment vorgegeben wird, wobei diese Sollwerte unterhalb der jeweiligen Schwellwerte für die Schubkraft und das Kippmoment liegen. Lässt sich eine der Belastungen, d.h. die Schubkraft oder das Kippmoment, als begrenzende Belastung identifizieren, wird für diese Belastung ein zeitlicher Mittelwert gebildet und dieser in Abhängigkeit der Lastsollvorgabe konstant gehalten.

Die Erhöhung der Rotordrehzahl im lastbegrenzten Betrieb zur Verringerung der Schubkraft und des Kippmoments kann bis zur Durchgangsdrehzahl ausgeführt werden. In diesem Fall fällt das bremsende Moment des elektrischen Generators vollständig weg und die umlaufende Einheit mit dem Rotor muss lediglich die Lagerverluste überwinden. Die sich für den Freilauf einstellende Durchgangsdrehzahl stellt die obere Grenze des lastbegrenzten Betriebs dar.

Zur Ausführung des erfindungsgemäßen Betriebsverfahrens wird an einem gattungsgemäßen Strömungskraftwerk eine Lastdetektionseinrichtung verwendet, die die Schubkraft und/oder das Kippmoment des Rotors ermittelt und an eine Steuerungseinrichtung weitergibt. Die Steuerungseinrichtung umfasst eine Steuerung oder Regelung für das Genecatormoment, die in der Lage ist, neben Messdaten zur Anströmungsgeschwindigkeit die Werte der Schubkraft und/oder des Kippmoments zu verarbeiten. Hierbei kommen wiederum kennlinienbasierte Verfahren unter zusätzlicher Berücksichtigung von Lastkennlinien für die Schubkraft und für das Kippmoment in Frage. Alternativ kann eine Regelung auf eine vorgegebene zeitlich gemittelte Last erfolgen. Dabei wird zur Bestimmung der Schubkraft und des Kippmoments entweder das im Rotorkreis vorliegende Strömungsfeld vermessen und die Last aus einem Anlagenmodell ermittelt oder die Lasten werden durch Lastmessvorrichtungen abgeleitet. Dies können beispielsweise Dehnungsmessstreifen an Abschnitten des Rotorblatts oder Drucksensoren in den Lagern sein. Zur Bestimmung des Strömungsfelds am Rotor werden vorzugsweise Sensoren verwendet, die nach dem ADCP-Prinzip arbeiten.

Die erfindungsgemäß vorgesehene Lastabregelung zur Begrenzung der Schubkraft des Rotors sowie des Rotorkippmoments ermöglicht es, den Antriebsstrang auf die vorgegebenen Schubkraft- und Kippmoment-Schwellwerte auszulegen. Dies betrifft insbesondere die Lagerung der umlaufenden Einheit sowie die daran anschließenden Haltestrukturen zur Lastableitung in der Maschinengondel. Dies ermöglicht eine Modularisierung der Anlage, wobei von einem einheitlichen Antriebsstrang ausgegangen und die Rotorcharakteristik standortspezifisch angepasst wird. Im einfachsten Fall wird der Rotordurchmesser variiert. Weitere Abweichungen der Rotorcharakteristik ergeben sich durch die Einstellung einer Tiefenverteilung des Profils und/oder des Verwindungsverlaufs. Durch eine solche Maßnahme können für einen Strömungskraftwerkspark unterschiedlich ausgelegte Anlagen verwendet werden, indem lediglich der Rotor an das jeweils vorliegende Leistungshistogramm und die zu erwartenden Kippmomente angepasst wird und Starrdardkomponenten für den Antriebsstrang verwendet werden. Für alle Anlagen wird dann ein einheitlicher Schwellwert für die Belastung festgelegt, ab dem der lastbegrenzte Betrieb eingeleitet wird.

Nachfolgend wird die Erfindung anhand von Ausführungsbeispielen in Verbindung mit Figurendarstellungen genauer erläutert. In diesen ist im Einzelnen Folgendes dargestellt:

Figur 1    zeigt den Verlauf der Schubkraft gegen die Anströmungsgeschwindigkeit am Rotor für einen erfindungsgemäßen Betrieb eines Strömungskraftwerks.

Figur 2    zeigt die vom Rotor aufgenommene Leistung für eine Betriebsführung gemäß Figur 1.

Figur 3    zeigt ein Beispiel für einen zeitlichen Verlauf der Schubkraft mit einem erfindungsgemäßen Übergang zum schubkraftbegrenzten Betrieb.

Figur 4    zeigt eine Gangkurve für die Leistung eines erfindunggemäßen Strömungskraftwerks.

Figur 5    zeigt den Verlauf des Kippmoments im Verhältnis zur Anströmungsgeschwindigkeit am Rotor für einen erfindungsgemäß lastbegrenzten Betrieb mit einem kippmomentbegrenzten Betriebsbereich und einem schubkraftbegrenzten Betriebsbereich.

Figur 6    zeigt den Verlauf der Schubkraft und die vom Rotor aufgenommenen Leistung für eine Betriebsführung gemäß Figur 5.

Figur 7    zeigt ein erfindungsgemäßes Strömungskraftwerk in teilangeschnittener Ansicht.

Figur 8    zeigt einen Strömungskraftwerkspark mit zwei Strömungskraftwerken mit baugleichen Antriebssträngen und Rotoren mit unterschiedlicher Rotorcharakteristik.

Figur 9    zeigt den Verlauf des Leistungsbeiwerts, des Schubbeiwerts und eines exemplarischen Beiwerts für das Kippmoment gegen die Schnelllaufzahl.

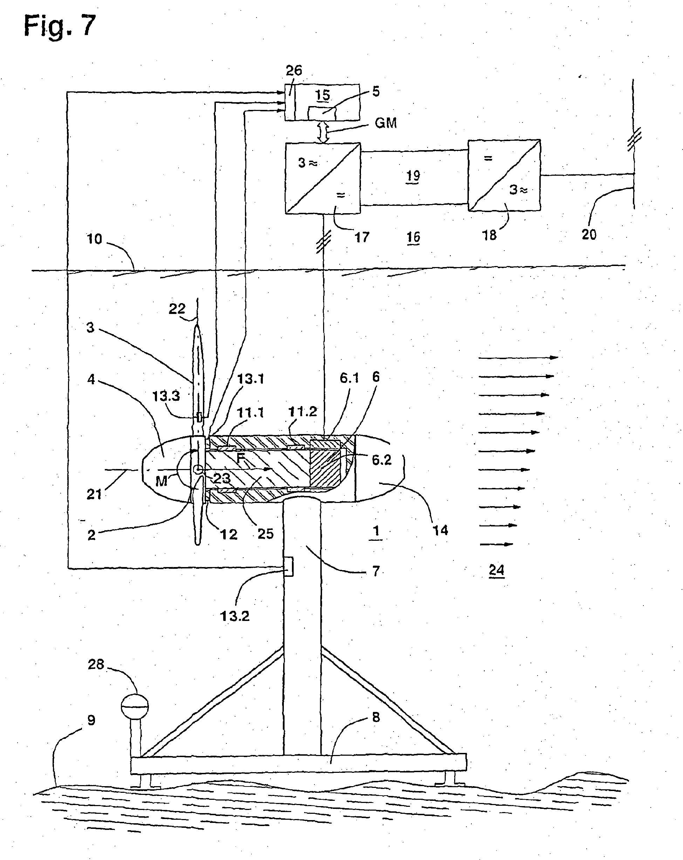

Figur 7 zeigt ein erfindungsgemäßes Strömungskraftwerk 1, das zur Gewinnung von Energie aus Gezeiten verwendet wird. Das Strömungskraftwerk 1 umfasst einen Rotor 3, dessen Rotorblätter drehstarr an einer Nabe befestigt sind. Der Rotor 3 ist Teil einer umlaufenden Einheit 2, die ferner eine Haube 4 und eine Antriebswelle 25 umfasst. Dabei ist die Antriebswelle 25 drehstarr mit einem Generatorläufer 6.2 eines elektrischen Generators 6 gekoppelt.

Zur Lagerung der umlaufenden Einheit 2 dienen Radiallager 11.1, 11.2 sowie ein Axiallager 12. Diese sind zum Teil in einer Maschinengondel 14 angeordnet, die zusätzlich den elektrischen Generator 6 aufnimmt. Die Maschinengondel 14 ist auf eine Tragstruktur 7 aufgesetzt. Diese wiederum wird von einem Fundamentteil 8 getragen, das als Schwerkraftfundament ausgebildet ist. Weitere Gründungsvarianten sind denkbar, so kann die Tragstruktur 7 als Turm ausgebildet sein, der in ein Bohrfundament am Gewässergrund 9 eingesetzt ist.

Der Rotor 3 legt eine horizontale Drehachse 21 fest. Hierzu verläuft senkrecht eine vertikale Hochachse 22. Zur Drehachse 21 und zur Hochachse 22 senkrechtstehend ist eine Querachse 23 festgelegt, die in der vorliegenden Darstellung lotrecht zur Papierebene verläuft.

Für einen als Auftriebsläufer gestalteten Rotor 3 resultieren als Folge der Anströmung Auftriebs- und Widerstandskräfte, die in Tangential- und Schubkräfte zerlegt werden können. Die Gesamtheit der Kräfte am Rotor 3 in Richtung der Drehachse 21 bilden die Schubkraft F. Ferner liegt bei einem vertikalen Strömungsprofil für die dargestellte Anströmung 24 ein Ungleichgewicht der Schubkräfte im oberen Halbkreis der vom Rotor 3 überstrichenen Fläche im Vergleich zum unteren Halbkreis vor. Hieraus resultiert ein Drehmoment um die Querachse 23, das vorliegend als Kippmoment M bezeichnet wird.

Das erfindungsgemäße Strömungskraftwerk 1 umfasst eine Lastdetektionseinrichtung 26, der Lastmessvorrichtungen 13.1, 13.2, 13.3 zugeordnet sind. Exemplarisch ist eine Lastmessvorrichtung 13.1 im Bereich der Axiallager 12 vorgesehen. Diese misst die Schubkraft F sowie das Kippmoment M anhand der Lagerkräfte. Eine weitere Lastmessvorrichtung 13.2 ist an der Tragstruktur 7 angebracht. Ferner werden Schubkräfte auf den Rotor 3 mittels eines Dehnungsmessstreifens, der in ein Rotorblatt aufgenommen ist, gemessen. Dieser bildet eine dritte Lastmessvorrichtung 13.3. Die einzelnen Lastmessvorrichtungen 13.1 - 13.3 können mit der Lastdetektionseinrichtung 26 verkabelt werden oder es liegt ein Datenaustausch über ein funkbasiertes System vor.

Die Lastdetektionseinrichtung 26 steht mit einer Steuereinrichtung 15 in Verbindung oder ist in diese aufgenommen. Dabei umfasst die Steuereinrichtung 15 eine Regelungsvorrichtung 5, die so ausgelegt ist, dass das Generatormoment beim Erreichen eines Schubkraft-Schwellwerts $F_L$ für die Schubkraft F und/oder beim Erreichen eines Kippmoment-Schwellwerts $M_L$ für das Kippmoment M das Generatormoment so steuert oder regelt, dass der Rotor 3 in einem lastbegrenzten Betrieb $B_L$ geführt wird. Hierzu wird über den Frequenzumrichter 16, der zur Aufschaltung des elektrischen Generators 6 auf ein Verbundnetz 20 dient, ein Generatormoment GM eingestellt. Dabei umfasst der Frequenzumrichter 16 einen generatorseitigen Gleichrichter 17, ein Gleichspannungszwischenkreis 19 und einen netzseitigen Wechselrichter 18. Die Führung des Generatormoments GM erfolgt über den generatorseitigen Gleichrichter 17, der an den Generatorstator 6.1 des elektrischen Generators 6 mittels einer Steuerung oder Regelung einen Laststrom vorgibt, um die Statorspannungskomponenten (d, q) anzupassen. Durch diese Vorgabe für das Generatormoment GM, die durch die vorliegende drehstarre Kopplung an den Rotor 3 weitergegeben wird, erfolgt der erfindungsgemäße lastbegrenzte Betrieb $B_L$.

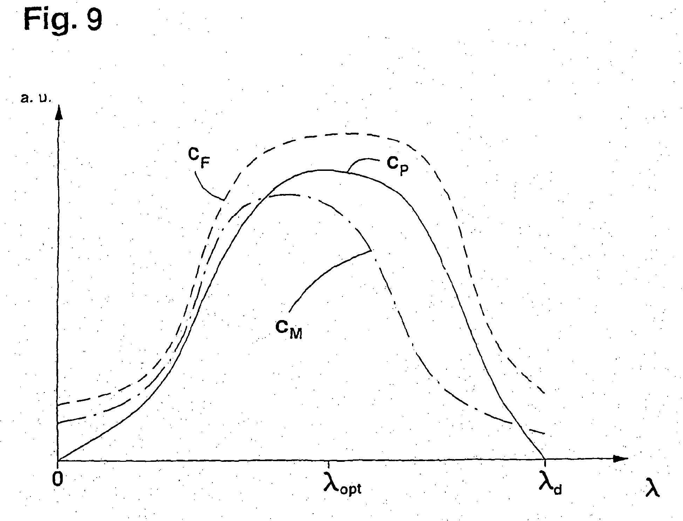

Figur 9 zeigt schematisch vereinfacht den Leistungsbeiwert $c_P$ gegen die Schnelllaufzahl $\lambda$. Unter der Schnelllaufzahl $\lambda$ wird das Verhältnis zwischen der Blattspitzengeschwindigkeit des Rotors 3 und der Anströmungsgeschwindigkeit v verstanden. Dabei stellt die Anströmungsgeschwindigkeit v eine Mittelung des Strömungsfelds über die vom Rotor 3 überstrichene Fläche 3 dar.

Der Leistungsbeiwert $c_p$ berechnet sich aus der vom Rotor aufgenommenen Leistung P, der Dichte $\rho$ des Strömungsmediums, der Anströmungsgeschwindigkeit v sowie dem Rotorradius r wie folgt:

$$c_P = \frac{P}{\frac{1}{2} \cdot \rho \cdot v^3 \cdot \pi \cdot r^2}$$

Der Leistungsbeiwert $c_P$ weist ein Maximum für eine leistungsoptimale Schnelllaufzahl $\lambda_{opt}$ auf. Demnach wird im leistungsoptimalen Betrieb ein gattungsgemäßes Strömungskraftwerk 1 mit der leistungsoptimalen Schnelllaufzahl $\lambda_{opt}$ betrieben. Dabei kann zur Betriebsführung das Strömungsfeld am Rotor 3 vermessen werden. Hierzu ist exemplarisch in Figur 7 eine Strömungsmessvorrichtung 8 gezeigt, die beispielsweise als Ultraschall-Doppler-Profil-Strömungsmesser (ADCP) ausgebildet sein kann.

Figur 9 zeigt ferner den Schubbeiwert $c_F$ gegen die Schnelllaufzahl $\lambda$. Dabei wird der Schubbeiwert $c_F$ aus der Schubkraft F, der Dichte $\rho$ des Strömungsmediums, der Anströmungsgeschwindigkeit v sowie dem Rotorradius r wie folgt bestimmt:

$$c_F = \frac{F}{\frac{1}{2} \cdot \rho \cdot v^2 \cdot \pi \cdot r^2}$$

Des Weiteren ist in Figur 9 der Kippmomentbeiwert $c_K$ für ein vorgegebenes Strömungsprofil dargestellt, wobei in erster Näherung $c_K$ als proportional zum Produkt aus $c_F$ und dem Rotorradius r angenommen werden kann.

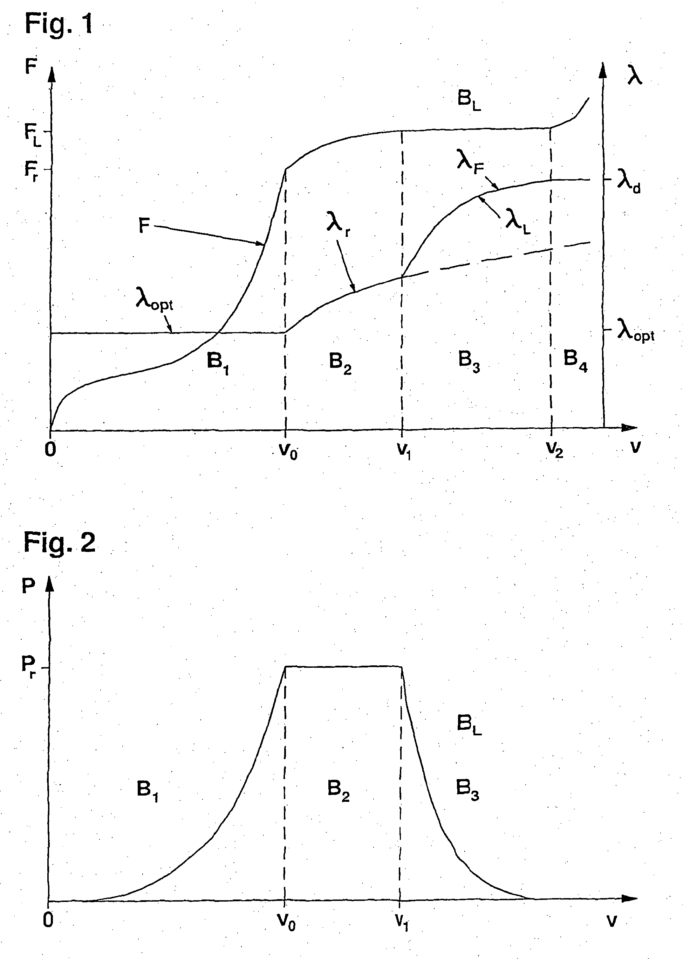

Wie in Figur 1 skizziert, wird das Strömungskraftwerk 1 für Anströmungsgeschwindigkeiten v kleiner $v_0$ im leistungsoptimalen Betrieb $B_1$ mit einer leistungsoptimalen Schnelllaufzahl $\lambda_{opt}$ geführt. Hierzu wird das Generatormoment GM in Abhängigkeit der gemessenen Anströmungsgeschwindigkeit eingestellt oder die Anlage wird auf der Grundlage einer bekannten Kennlinie gesteuert, sodass auf eine Strömungsmessvorrichtung 28 verzichtet werden kann.

Bei einer Anströmungsgeschwindigkeit $v_0$ ist die Nominalleistung $P_r$ des Strömungskraftwerks erreicht und für höhere Anströmungsgeschwindigkeiten bis $v_1$ folgt der leistungsbegrenzte Betrieb $B_2$, für den ein solches Generatormoment GM vorgegeben ist, dass eine leistungsbegrenzte Schnelllaufzahl $\lambda_r$ resultiert, die die aufgenommene Leistung P im Mittel auf die Nominalleistung $P_r$ beschränkt. Dabei ist die leistungsbegrenzte Schnelllaufzahl $\lambda_r$ größer als die leistungsoptimale Schnelllaufzahl $\lambda_{opt}$.

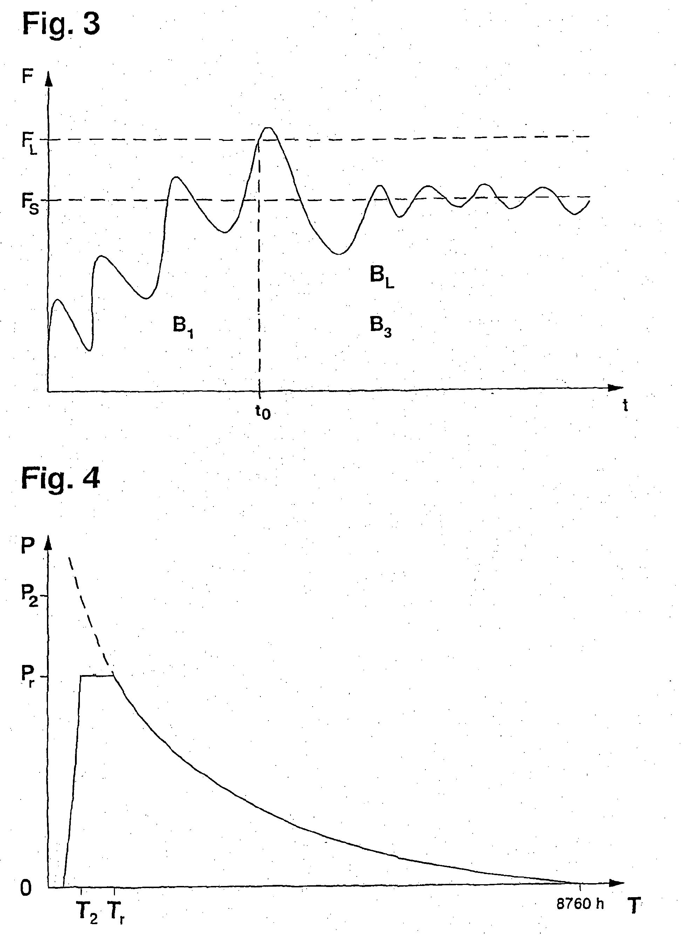

Wie aus Figur 1 ersichtlich, steigt im leistungsbegrenzten Betrieb $B_2$ die Schubkraft F mit zunehmender Anströmungsgeschwindigkeit v an, bis der Schubkraft-Schwellwert $F_L$ erreicht ist. Dann verlässt die Anlagenführung den leistungsbegrenzten Betrieb $B_2$ und geht in einen lastbegrenzten Betrieb $B_L$ über. Dies ist anhand des in Figur 3 skizzierten zeitlichen Verlaufs für die Schubkraft F dargestellt. Für eine gemittelte Anströmungsgeschwindigkeit v oberhalb $v_0$ übersteigt die Schubkraft den Schubkraft-Schwellwert $F_L$. Aufgrund dieses Ereignisses setzt der lastbegrenzte Betrieb $B_L$ ein - vorliegend der schubbegrenzte Betrieb $B_3$.

Bevorzugt wird der lastbegrenzte Betrieb $B_L$ als Kennlinienbetrieb ausgeführt für den nicht nur die gemittelte Anströmungsgeschwindigkeit v am Rotor, sondern zusätzlich die Schubkraft und/oder das auf den Rotor wirkende Kippmoment berücksichtigt wird. Besonders bevorzugt wird für das vorliegende Ausführungsbeispiel ein Schubkraft-Sollwert $F_S$ unterhalb des Schubkraft-Schwellwerts $F_L$ vorgegeben, um sicherzustellen, dass die aufgrund der Systemträgheit und durch Regelabweichung auftretenden Schwankungen unterhalb des vorgegebenen Schubkraft-Schwellwerts $F_L$ gehalten werden. Dabei kann die Regelung adaptiv ausgeführt sein, um auf die vorliegenden Geschwindigkeitsfluktuationen in der Anströmung reagieren zu können.

In der vereinfachten Skizze von Figur 1 ist der lastbegrenzte Betrieb $B_L$ im Bereich zwischen den gemittelten Anströmungsgeschwindigkeiten $v_1$ und $v_2$ skizziert. Die vorliegend zu begrenzende Last ist die Schubkraft F, sodass als lastbegrenzter Betrieb $B_L$ ein schubbegrenzter Betrieb $B_3$ mit einer schubbegrenzten Schnelllaufzahl $\lambda_F$ zugeordnet ist. Ersichtlich ist, dass der Rotor 3 des Strömungskraftwerks 1 weiter in den Schnelllaufbereich geführt wird, entsprechend liegt im lastbegrenzten Betrieb $B_L$ die lastbegrenzte Schnelllaufzahl $\lambda_L$ oberhalb der leistungsbegrenzten Schnelllauf-

zahl $\lambda_r$. Hieraus resultiert der in der Figur 2 skizzierte Leistungsabfall im lastbegrenzten Betrieb $B_L$.

Der lastbegrenzte Betrieb $B_L$ kann lediglich bis zu einer Grenzgeschwindigkeit für die Anströmung bei $v_2$ ausgeführt werden, für die eine der Durchgangsdrehzahl zugeordnete Schnelllaufzahl $\lambda_d$ erreicht wird. Eine weitere Erhöhung der Schnelllaufzahl $\lambda$ ist bei zunehmender Anströmungsgeschwindigkeit $v$ nicht mehr möglich, sodass die Lasten auf den Antriebsstrang erneut zunehmen. Exemplarisch ist hierzu für den Betrieb bei der Durchgangsdrehzahl $B_4$ in Figur 1 ein erneuter Anstieg der Schubkraft F gezeigt. Daher ist das Anlagendesign so auszulegen, dass der Betrieb bei der Durchgangsdrehzahl $B_4$ außerhalb des für den vorliegenden Anlagenstandort vorhergesagten Leistungsspektrums liegt.

Figur 4 verdeutlicht die erfindungsgemäße Anlagenführung anhand einer Gangkurve. Auf der Abszisse sind die Betriebsstunden aufgetragen und auf der Ordinate die vom Rotor 3 aufgenommene Leistung P. Die Gangkurve repräsentiert die Betriebsdauer, für die eine vorgegebene Anlagenleistung überschritten wird. Ersichtlich ist, dass für eine Betriebsdauer $T_r - T_2$ die Anlage im leistungsbegrenzten Betrieb $B_2$ geführt wird und damit die Nominalleistung $P_r$ erzielt wird. Steigt die in der Strömung vorliegende Leistung, wie durch den gestrichelt dargestellten Teil der Gangkurve illustriert, weiter an, erfolgt erfindungsgemäß der lastbegrenzte Betrieb $B_L$, sodass für eine geringe Betriebszeit $T_2$ aufgrund der Lastbegrenzung bei besonders hohen Strömungsgeschwindigkeiten die Anlagenleistung unterhalb der Normalleistung $P_r$ liegt. Trotz dieses Leistungseinbruchs während weniger Betriebsstunden mit höchster Belastung der Anlage ist der Gesamtleistungsertrag eines erfindungsgemäßen Strömungskraftwerks dennoch erhöht, da aufgrund der Lastbeschränkung der Rotor großbauend ausgelegt werden kann und so die Leistungsausbeute im mittleren Bereich des Leistungsspektrums erhöht wird.

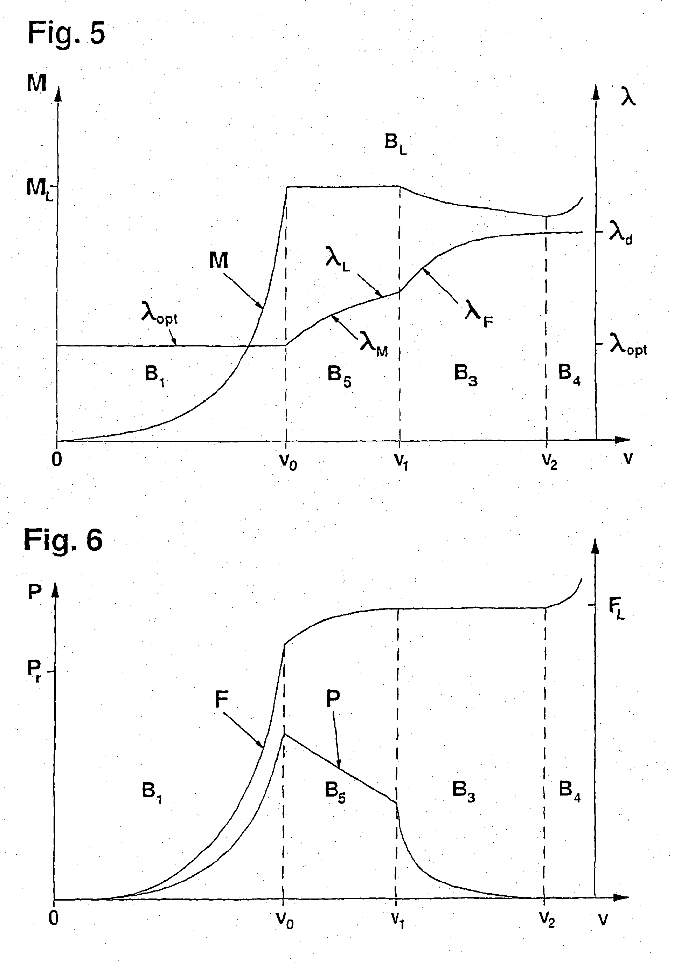

Figur 5 skizziert ein weiteres Ausführungsbeispiel für den erfindungsgemäßen lastbegrenzten Betrieb $B_L$, wobei sich aus dem gegen die Schnelllaufzahl $\lambda$ aufgetragenen Kippmoment M ergibt, dass bei der Anströmungsgeschwindigkeit $v_0$ der Kippmoment-Schwellwert $M_L$ erreicht wird. Damit erfolgt der Übergang zum lastbegrenzten Betrieb $B_L$ - vorliegend zum kippmomentbegrenzten Betrieb $B_5$.

Hierzu wird eine gegenüber der leistungsoptimalen Schnelllaufdrehzahl $\lambda_{opt}$ größere lastbegrenzte Schnelllaufzahl $\lambda_L$ eingestellt. Vorliegend folgt der Verlauf der Schnelllaufzahlen $\lambda$ zwischen den gemittelten Anströmungsgeschwindigkeiten $v_0$ und $v_1$ im kippmomentbegrenzten Betrieb $B_5$ der kippmomentbegrenzten Leistungszahl $\lambda_M$. Hieraus resultiert der in Figur 6 gezeigte Abfall der vom Rotor 3 aufgenommenen Leistung P im kippmomentbegrenzten Betrieb $B_5$. Für die vorliegende Ausgestaltung wird angenommen, dass in diesem Betriebsbereich mit zunehmender Anströmungsgeschwindigkeit $v$ die vom Rotor aufgenommene Schubkraft F wie in Figur 6 skizziert weiter ansteigt, bis der Schubkraft-Schwellwert $F_L$ für eine Anströmungsgeschwindigkeit $v_1$ erreicht wird. Ab dieser gemittelten Anströmungsgeschwindigkeit $v_1$ wird der lastbegrenzte Betrieb $B_L$ als schubbegrenzter Betrieb $B_3$ weitergeführt. Hierzu folgt, wie in Figur 5 dargestellt, die Schnelllaufzahl $\lambda$ der schubbegrenzten Schnelllaufzahl $\lambda_F$. Als Folge bleibt die Schubkraft F im Wesentlichen konstant und das Kippmoment M sinkt mit zunehmender Anströmungsgeschwindigkeit $v$. Das im Zusammenhang mit den Figuren 5 und 6 erläuterte Ausführungsbeispiel ist lediglich exemplarisch. Denkbar ist ein lastbegrenzter Betrieb $B_L$, der ausschließlich als kippmomentbegrenzter Betrieb $B_5$ ausgeführt wird.

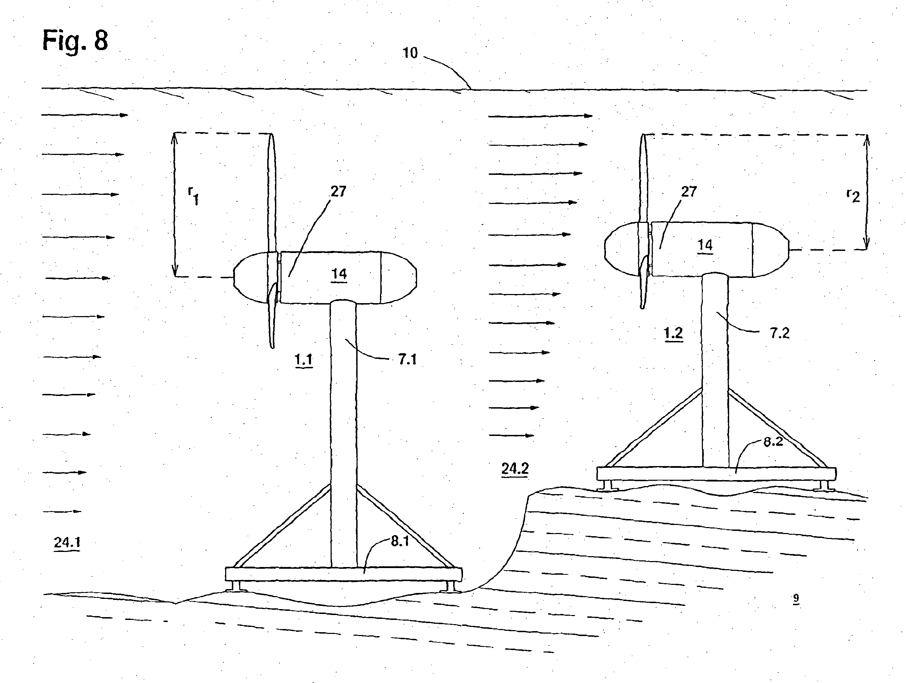

Eine Lastbegrenzung mit einer Vorgabe für den Schubkraft-Schwellwert $F_L$ und den Kippmoment-Schwellwert $M_L$ ermöglicht eine Vereinfachung der Anlagenmodularisierung. Zur Verdeutlichung ist in Figur 8 ein Strömungskraftwerkspark mit einem ersten Strömungskraftwerk 1.1 und einem zweiten Strömungskraftwerk 1.2 dargestellt. Für die Strömungskraftwerke 1.1 und 1.2 liegen Anströmungen 24.1, 24.2 mit einem unterschiedlichen Strömungsprofil vor. Dabei wird zur Anlagenanpassung von einem übereinstimmend ausgebildeten Antriebsstrang 27 für das erste Strömungskraftwerk 1.1 und für das zweite Strömungskraftwerk 1.2 ausgegangen. Dies betrifft insbesondere die Lagerungskomponenten wie das in Figur 7 dargestellte Radiallager 11.1, 11.2 sowie das Axiallager 12 und die Antriebswelle 25. Des Weiteren stimmen die Maschinengondel 14 und die im Einzelnen nicht dargestellten lasttragenden Strukturen zwischen dem Antriebsstrang 27 und der jeweiligen Tragstruktur 7.1, 7.2 des ersten Strömungskraftwerks 1.1 und des zweiten Strömungskraftwerks 1.2 überein. An den Anlagenstandort angepasst wird die Rotorcharakteristik. Vorliegend ist ein erster Rotor 3.1 mit einem Rotorradius $r_1$ dargestellt, der den Rotorradius $r_2$ des zweiten Rotors 3.2 übersteigt. Ferner ist die Länge der als Turm ausgebildeten Tragstruktur 7.1 des ersten Strömungskraftwerks 1.1 im Vergleich zur Länge der Tragstruktur 7.2 des zweiten Strömungskraftwerks so angepasst, dass der Scheitel des ersten Rotors 3.1 auf der gleichen Tauchtiefe wie der Scheitel des zweiten Rotors 3.2 liegt. Für das Fundament 8.1, 8.2 ist eine Anpassung an die Länge der Tragstruktur 7.1, 7.2 möglich. Für eine einfachere Ausführung wird jedoch ein einheitliches Fundament 8.1, 8.2 verwendet.

Weitere Ausgestaltungen der Erfindung in Rahmen der nachfolgenden Schutzansprüche sind denkbar. Beispielsweise kann die Häufigkeit für die der Schubkraft-Schwellwert $F_L$ und der Kippmoment-Schwellwert $M_L$ erreicht wird, erfasst und abgespeichert werden, um die Notwendigkeit einer Wartungsmaßnahme festlegen zu können.

Bezugszeichenliste

EP 2 707 597 B1

| | |
|---|---|
| 1 | Strömungskraftwerk |
| 1.1 | erstes Strömungskraftwerk |
| 1.2 | zweites Strömungskraftwerk |
| 2 | umlaufende Einheit |
| 3 | Rotor |
| 3.1 | erster Rotor |
| 3.2 | zweiter Rotor |
| 4 | Haube |
| 5 | Regelungsvorrichtung |
| 6 | elektrischer Generator |
| 6.1 | Generatorstator |
| 6.2 | Generatorläufer |
| 7,7.1,7.2 | Tragstruktur |
| 8,8.1,8.2 | Fundament |
| 9 | Gewässergrund |
| 10 | Wasseroberfläche |
| 11.1, 11.2 | Radiallager |
| 12 | Axiallager |
| 13.1, 13.2 | Lastmessvorrichtung |
| 14 | Maschinengondel |
| 15 | Steuereinrichtung |
| 16 | Frequenzumrichter |
| 17 | generatorseitiger Gleichrichter |
| 18 | netzseitiger Wechselrichter |
| 19 | Gleichspannungszwischenkreis |
| 20 | Verbundnetz |
| 21 | Drehachse |
| 22 | Hochachse |
| 23 | Querachse |
| 24, 24.1, 24.2 | Anströmung |
| 25 | Antriebswelle |
| 26 | Lastdetektionseinrichtung |
| 27 | Antriebsstrang |
| 28 | Strömungsmessvorrichtung |

| | |
|---|---|
| $\lambda$ | Schnelllaufzahl |
| $\lambda_d$ | der Durchgangsdrehzahl zugeordnete Schnelllaufzahl |
| $\lambda_{opt}$ | leistungsoptimale Schnelllaufzahl |
| $\lambda_r$ | leistungsbegrenzte Schnelllaufzahl |
| $\lambda_L$ | lastbegrenzte Schnelllaufzahl |
| $\lambda_F$ | schubbegrenzte Schnelllaufzahl |
| $\lambda_M$ | kippmomentbegrenzte Schnelllaufzahl |
| P | Leistung |
| F | Schubkraft |
| $F_r$ | nominale Schubkraft |
| $F_L$ | Schubkraft-Schwellwert |
| Fs | Schubkraft-Sollwert |
| $P_r$ | Nominalleistung |
| v, $v_0$, $v_1$, $v_2$ | gemittelte Anströmungsgeschwindigkeit |
| $v_n$ | nominale Anströmungsgeschwindigkeit |
| $B_1$ | leistungsoptimaler Betrieb |
| $B_2$ | leistungsbegrenzter Betrieb |
| $B_3$ | schubbegrenzter Betrieb |
| $B_4$ | Betrieb bei der Durchgangsdrehzahl |
| $B_5$ | kippmomentbegrenzter Betrieb |
| $B_L$ | lastbegrenzter Betrieb |
| $v_{max}$ | Maximalgeschwindigkeit |

| | |
|---|---|
| $c_P$ | Leistungsbeiwert |
| $c_F$ | Schubbeiwert |
| $c_K$ | Kippmomentbeiwert |
| $n_d$ | Durchgangsdrehzahl |
| M | Kippmoment |
| $M_L$ | Kippmomentschwellwert |
| r, $r_1$, $r_2$ | Rotorradius |
| GM | Generatormoment |
| T | Betriebsdauer |

**Patentansprüche**

1. Verfahren zum Betrieb eines Strömungskraftwerks (1) mit

   1.1 einem Rotor (3), dem eine horizontale Drehachse (21), eine vertikale Hochachse (22) und eine horizontale Querachse (23) zugeordnet sind, die senkrecht zueinander stehen, wobei der Rotor (3), angetrieben durch eine Anströmung (24), ein Antriebsmoment um die Drehachse (21), eine Schubkraft (F) in Richtung der Drehachse (21) und ein Kippmoment (M) um die Querachse (23) erzeugt;
   1.2 einem elektrischen Generator (6), der mit dem Rotor (3) wenigstens mittelbar verbunden ist, sodass der elektrische Generator (6) beim Betrieb ein Generatormoment (GM) bewirkt, das den Rotor (3) bremst;
   wobei
   1.3 beim Erreichen eines Schubkraft-Schwellwerts ($F_L$) für die Schubkraft (F) und/oder eines Kippmoment-Schwellwerts ($M_L$) für das Kippmoment (M) durch die Einstellung des Generatormoments (GM) der Rotor (3) in einen lastbegrenzten Betrieb ($B_L$) geführt wird, für den der Rotor (3) mit einer Schnelllaufzahl ($\lambda$) umläuft, die größer als eine leistungsoptimale Schnelllaufzahl ($\lambda_{opt}$) und größer als eine leistungsbegrenzte Schnelllaufzahl ($\lambda_R$) ist;
   wobei
   1.4 im lastbegrenzten Betrieb ($B_L$) die Schubkraft (F) oder das Kippmoment (M) für eine zeitliche Mittelung in einem vorgegebenen Zeitintervall konstant gehalten wird.

2. Verfahren nach Anspruch 1, **dadurch gekennzeichnet, dass** der lastbegrenzte Betrieb ($B_L$) bis zu einer Schnelllaufzahl ($\lambda$) ausgeführt wird, die einer der Durchgangsdrehzahl zugeordneten Schnelllaufzahl ($\lambda_d$) entspricht.

3. Verfahren nach Anspruch 1 oder 2, wobei die Schubkraft (F) und/oder das Kippmoment (M) an einer Komponente einer den Rotor (3) umfassenden umlaufende Einheit (2) und/oder einer Komponente der Lagerung der umlaufenden Einheit (2) und/oder einer Komponente der Tragstruktur (7) und/oder einer Komponente des Fundaments (8) des Strömungskraftwerks (1) gemessen werden.

4. Verfahren nach einem der Ansprüche 1 bis 3, wobei die Anströmung (24), die den Rotor (3) antreibt, bestimmt wird.

5. Verfahren nach einem der Ansprüche 1 bis 4, wobei das Erreichen des Schubkraft-Schwellwerts ($F_L$) und/oder des Kippmoment-Schwellwerts ($M_L$) detektiert und in einem Steuergerät (15) aufgezeichnet wird.

6. Verfahren nach einem der Ansprüche 1 bis 5, wobei das Generatormoment (GM) durch eine drehstarre Kopplung zwischen dem Rotor (3) und einem Generatorläufer (6.1) des elektrischen Generators (6) übertragen wird.

7. Strömungskraftwerk, umfassend

7.1 einen Rotor (3), dem eine horizontale Drehachse (21), eine vertikale Hochachse (22) und eine horizontale Querachse (23) zugeordnet sind, die senkrecht zueinander stehen;
7.2 einen elektrischen Generator (6), der mit dem Rotor (3) wenigstens mittelbar verbunden ist, sodass der elektrische Generator (6) beim Betrieb ein Generatormoment (GM) bewirkt, das den Rotor (3) bremst; **gekennzeichnet durch** die folgenden Merkmale:
7.3 eine Lastdetektionseinrichtung (26) zur Bestimmung der Schubkraft (F) des Rotors (3) in Richtung der Drehachse (21) und/oder des Kippmoments (M) des Rotors (3) um die Querachse (23), die mit einer Steuereinrichtung (15) mit einer Steuerung oder Regelung für das Generatormoment (GM) verbunden ist;
7.4 der elektrische Generator (6) ist eine Synchronmaschine, und das Steuergerät (15) ist für die Steuerung oder Regelung des Laststroms im elektrischen Generator (6) mittels der Anpassung der Statorspannungskomponenten (d, q) ausgebildet.

8. Strömungskraftwerkspark mit wenigstens zwei Strömungskraftwerken (1.1, 1.2) nach Anspruch 7, **dadurch gekennzeichnet, dass** der Antriebsstrang (27) der Strömungskraftwerke (1.1, 1.2) baugleich ist und der erste Rotor (3.1) des ersten Strömungskraftwerks (1.1) gegenüber dem zweiten Rotor (3.2) des zweiten Strömungskraftwerks (1.2) eine abweichende Rotorcharakteristik aufweist.

9. Strömungskraftwerkpark nach Anspruch 8, wobei die Abweichung der Rotorcharakteristik durch unterschiedliche Rotorradien (r1, r2) und/oder unterschiedliche Profileigenschaften und/oder durch Unterschiede der Tiefenverteilung des Profils und/oder des Verwindungsverlaufs für den ersten Rotor (3.1) und den zweiten Rotor (3.2) eingestellt ist.

10. Strömungskraftwerkpark nach einem der Ansprüche 8 oder 9, **dadurch gekennzeichnet, dass** der Antriebsstrang (27) für einen vorgegebenen Schubkraft-Schwellwert ($F_L$) und/oder einen vorgegebenen Kippmoment-Schwellwert ($M_L$) ausgelegt ist.

**Claims**

1. A method for operating a flow power plant (1), comprising

1.1 a rotor (3), to which a horizontal rotational axis (21), a vertical axis (22) and a horizontal transverse axis (23) are assigned, which stand perpendicularly to each other, wherein the rotor (3), driven by an inflow (24), generates a driving torque about the rotational axis (21), a thrust force (F) in the direction of the rotational axis (21) and a tilting moment (M) about the transverse axis (23);
1.2 an electric generator (6) which is connected at least indirectly to the rotor (3), so that the electric generator (6) produces a generator torque (GM) during operation which brakes the rotor (3);
**characterized in that**
1.3 upon reaching a thrust-force threshold value ($F_L$) for the thrust force (F) and/or a tilting-moment threshold value ($M_L$) for the tilting moment (M) the rotor (3) is guided to load-limited operation ($B_L$) by setting the generator torque (GM), for which the rotor (3) revolves at a tip speed ratio ($\lambda$) which is higher than a power-optimal tip speed ratio ($X_{opt}$) and higher than a power-limited tip speed ratio ($\lambda_R$);
1.4 the thrust force (F) or the tilting moment (M) is kept constant in load-limited operation ($B_L$).

2. A method according to claim 1, wherein the load-limited operation ($B_L$) is carried out up to a tip speed ratio ($\lambda$) which corresponds to a tip speed ratio ($\lambda_d$) assigned to the runaway speed.

3. A method according to one of the preceding claims, wherein the thrust force (F) and/or the tilting moment (M) are measured on a component of a revolving unit (2) comprising the rotor (3) and/or a component of the bearing of the revolving unit (2) and/or a component of the support structure (7) and/or a component of the foundation (8) of the flow power plant (1).

4. A method according to one of the preceding claims, wherein the thrust force (F) and/or the tilting moment (M) are determined by a measurement of the inflow (24) which drives the rotor (3).

5. A method according to one of the preceding claims, wherein the reaching of the thrust-force threshold value ($F_L$) and/or the tilting-moment threshold value ($M_L$) is detected and recorded in a control device (15).

6. A method according to one of the preceding claims, wherein the generator torque (GM) is transmitted by torsion-proof coupling between the rotor (3) and a generator rotor (6.1) of the electric generator (6).

7. A flow power plant, comprising

7.1 a rotor (3), to which a horizontal rotational axis (21), a vertical axis (22) and a horizontal transverse axis (23) are assigned, which stand perpendicularly to each other;
7.2 an electric generator (6) which is connected to the rotor (3) at least indirectly;
7.3 a load detection device (26) for determining the thrust force (F) of the rotor (3) in the direction of the rotational axis (21) and/or the tilting moment (M) of the rotor (3) about the transverse axis (23), which is connected to a control device (15) with an open-loop or closed-loop control for the generator torque (GM);
7.4 the load-limited operation ($B_L$) reaches up to a tip speed ratio ($\lambda$) which corresponds to a tip speed ratio ($\lambda_d$) assigned to the runaway speed, **characterized by** the following features:

the electric generator (6) is a synchronous machine and the control device (15) for the open-loop or closed-loop control of the load current in the electric generator (6) is formed by adjusting the stator voltage components (d, q).

8. A flow power plant according to one of the claims 1 to 7, **characterized in that** the drive train (27) of the flow power plants (1.1, 1.2) is identical, and the first rotor (3.1) of the first flow power plant (1.1) has deviating rotor characteristics in relation to the second rotor (3.2) of the second flow power plant (1.2).

9. A flow power plant according to claim 8, **characterized in that** the deviation in the rotor characteristics is set by different rotor radii (r1, r2) and/or different profile properties and/or by differences in the depth distribution of the profile and/or the progression of the torsion for the first rotor (3.1) and the second rotor (3.2).

10. A flow power plant according to one of the claims 8 or 9, **characterized in that** the drive train (27) is configured for a predetermined thrust-force threshold value ($F_L$) and/or a predetermined tilting-moment threshold value ($M_L$).

## Revendications

1. Procédé d'exploitation d'une centrale hydromotrice (1) comportant

1.1 un rotor (3) auquel sont associés un axe de rotation horizontal (21), un axe vertical (22) monté verticalement et un axe transversal horizontal (23), disposés perpendiculairement les uns par rapport aux autres, où le rotor (3), entraîné par un balayage (24), rotor qui génère un couple d'entraînement autour de l'axe de rotation (21), une force de poussée (F) en direction de l'axe de rotation (21) et un couple de basculement (M) autour de l'axe transversal (23) ;
1.2 un générateur électrique (6), qui est relié au moins indirectement au rotor (3), de sorte que le générateur électrique (6) produit un couple de générateur (GM) en service, qui freine le rotor (3) ; où
1.3 lorsque l'on atteint un seuil de force de poussée ($F_L$) pour ladite force de poussée (F) et/ou un seuil de couple de basculement ($M_L$) pour ledit couple de basculement (M), le rotor passe en mode limité en charge ($B_L$) sous l'effet du réglage du couple générateur (GM), mode pour lequel le rotor (3) tourne à une vitesse spécifique ($\lambda$) qui est supérieure à une vitesse spécifique de puissance optimale ($\lambda_{opt}$) et supérieure à une vitesse spécifique limitée en charge ($\lambda_R$); où
1.4 en mode limité en charge ($B_L$) la force de poussée (F) ou le couple de basculement (M) est maintenu constant pour une moyenne temporelle dans un intervalle de temps donné.

2. Procédé selon la revendication 1, **caractérisé en ce, que** le mode limité en charge ($B_L$) est maintenu jusqu'à ce l'on obtienne une vitesse spécifique ($\lambda$) correspondant à une vitesse spécifique ($\lambda_d$) associée à la vitesse d'emballement.

3. Procédé selon la revendication 1 ou 2, où l'on mesure la force de poussée (F) et/ou le couple de basculement (M) au niveau d'un composant d'une unité rotative (2) comprenant le rotor (3) et/ou d'un composant de l'ensemble roulement de l'unité rotative (2) et/ou d'un composant de la structure portante (7) et/ou d'un composant des fondations (8) de la centrale hydromotrice (1).

4. Procédé selon l'une quelconque des revendications 1 à 3, où l'on définit le balayage (24) entraînant le rotor (3).

5. Procédé selon l'une quelconque des revendications 1 à 4, où l'on détecte le moment auquel on atteint le seuil de force de poussée ($F_L$) et/ou le seuil de couple de basculement (MI) et on l'affiche ce moment dans un appareil de commande (15).

6. Procédé selon l'une quelconque des revendications 1 à 5, où le couple de générateur (GM) est transmis par un accouplement rotatif entre le rotor (3) et un rotor de générateur (6.1) du générateur (6).

7. Centrale marémotrice, comprenant

7.1 un rotor (3), auquel sont associés un axe de rotation horizontal (21), un axe vertical (22) disposé verticalement et un axe transversal horizontal (23), disposés perpendiculairement les uns par rapport aux autres,
7.2 un générateur électrique (6), qui est relié au moins indirectement au rotor (3), de sorte que le générateur électrique (6) produit un couple de générateur (GM) en service, qui freine le rotor (3) ; présentant les caractéristiques suivantes :
7.3 un dispositif de détection de charge (26) permettant de déterminer la force de poussée (F) du rotor (3) dans le sens de l'axe de rotation (21) et/ou le couple de basculement (M) du rotor (3) autour de l'axe transversal (23), lequel dispositif est relié à un système de commande (15) permettant de commander ou de réguler le couple de générateur (GM) ;
7.4 le générateur électrique (6) est une machine synchrone, et l'appareil de commande (15) est conçu pour la commande ou la régulation du courant de charge dans le générateur électrique (6) en adaptant les composants de tension de stator (d, q).

8. Parc de centrales hydromotrices comportant au moins deux centrales hydromotrices (1.1, 1.2) selon la revendication 7, **caractérisé en ce que** le train d'entraînement (27) des centrales hydromotrices (1.1, 1.2) est de même construction et le premier rotor de la première centrale hydromotrice présente une caractéristique de rotor déviante par rapport au second rotor de la seconde centrale hydromotrice (1.2).

9. Parc de centrales marémotrices selon la revendication 8, où la déviation de la caractéristique de rotor est réglée par différents rayons de rotor (r1, r2) et/ou différentes propriétés de profil et/ou par des différences en terme de répartition en profondeur du profil et/ou du la courbe de distorsion pour le premier rotor (3.1) et le second rotor (3.2).

10. Parc de centrales marémotrices selon l'une des revendications 8 ou 9, **caractérisé en ce que** le train d'entraînement (27) est conçu pour un seuil de force de poussée prédéterminé (FI) et/ou un seuil de couple de basculement prédéterminé ($M_L$).

**Fig. 1**

**Fig. 2**

## Fig. 3

## Fig. 4

# Fig. 5

# Fig. 6

# Fig. 7

Fig. 8

# Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008053732
- GB 2461265 A
- EP 0223729 A1
- EP 0223731 A1